(19) Europäisches Patentamt
European Patent Office
Office européen des brevets

(11) **EP 3 583 408 B1**

(12) **EUROPÄISCHE PATENTSCHRIFT**

(45) Veröffentlichungstag und Bekanntmachung des Hinweises auf die Patenterteilung:
**31.07.2024  Patentblatt 2024/31**

(21) Anmeldenummer: **18716525.3**

(22) Anmeldetag: **20.03.2018**

(51) Internationale Patentklassifikation (IPC):
**G01N 23/046** (2018.01)

(52) Gemeinsame Patentklassifikation (CPC):
**G01N 23/046;** G01N 2223/401

(86) Internationale Anmeldenummer:
**PCT/EP2018/056949**

(87) Internationale Veröffentlichungsnummer:
**WO 2018/177798 (04.10.2018 Gazette 2018/40)**

(54) **ERMITTELN DER POSE EINER RÖNTGENEINHEIT RELATIV ZU EINEM OBJEKT ANHAND EINES DIGITALEN MODELLS DES OBJEKTS**

DETERMINATION OF THE POSE OF AN X-RAY UNIT RELATIVE TO AN OBJECT USING A DIGITAL MODEL OF THE OBJECT

DÉTERMINATION DU POSITIONNEMENT D'UNE UNITÉ DE RAYONS X PAR RAPPORT À UN OBJET À L'AIDE D'UN MODÈLE NUMÉRIQUE DE L'OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.03.2017  DE 102017205113**

(43) Veröffentlichungstag der Anmeldung:
**25.12.2019  Patentblatt 2019/52**

(73) Patentinhaber: **Siemens Aktiengesellschaft
80333 München (DE)**

(72) Erfinder:
  • **ALBARQOUNI, Shadi
    80637 München (DE)**
  • **BUI, Linda Mai
    82140 Olching/Grasslfing (DE)**
  • **ILIC, Slobodan
    81547 München (DE)**
  • **SCHRAPP, Michael
    80807 München (DE)**

(74) Vertreter: **Siemens Patent Attorneys
Postfach 22 16 34
80506 München (DE)**

(56) Entgegenhaltungen:
DE-A1- 102006 011 008    US-A1- 2010 239 153
US-A1- 2013 177 230    US-A1- 2017 024 634

• ALIREZA KHOTANZAD ET AL: "Recognition and Pose Estimation of Unoccluded Three-Dimensional Objects from a Two-Dimensional Perspective View by Banks of Neural Networks", IEEE TRANSACTIONS ON NEURAL NETWORKS, IEEE SERVICE CENTER, PISCATAWAY, NJ, US, vol. 7, no. 4, 1 July 1996 (1996-07-01), XP011039854, ISSN: 1045-9227
• SHUN MIAO ET AL: "Real-time 2D/3D registration via CNN regression", 2016 IEEE 13TH INTERNATIONAL SYMPOSIUM ON BIOMEDICAL IMAGING (ISBI), 1 April 2016 (2016-04-01), pages 1430 - 1434, XP055495266, ISBN: 978-1-4799-2349-6, DOI: 10.1109/ISBI.2016.7493536
• DENNIS D A ET AL: "A robust method for registration of three-dimensional knee implant models to two-dimensional fluoroscopy images", IEEE TRANSACTIONS ON MEDICAL IMAGING, IEEE SERVICE CENTER, PISCATAWAY, NJ, US, vol. 22, no. 12, December 2003 (2003-12-01), pages 1561 - 1574, XP011103806, ISSN: 0278-0062, DOI: 10.1109/TMI.2003.820027

EP 3 583 408 B1

**Beschreibung**

Die Erfindung betrifft ein Verfahren zum Ermöglichen einer tomographischen Rekonstruktion eines Objekts mittels einer Röntgenvorrichtung durch Ermitteln einer Dämpfung eines Röntgenstrahls durch das Objekt. Ein zweiter Aspekt der Erfindung betrifft eine Röntgenvorrichtung.

Röntgenvorrichtungen werden für Diagnose und Prüfung, beispielsweise in der Industrie, verwendet, da diese Informationen über die innere Struktur bereitstellen können. Röntgenbilder repräsentieren eine Dämpfung eines Röntgenstrahls in einem Objekt. Der Röntgenstrahl wird durch eine Röntgenquelle emittiert und durch einen Röntgendetektor detektiert. Die Dämpfung wird entlang des Röntgenstrahls gemessen und hängt sowohl vom Objekt als auch von der Konfiguration der Röntgenvorrichtung ab. Die Konfiguration der Röntgenvorrichtung kann den präzisen Abstand der Röntgenquelle und des Röntgendetektors voneinander als auch den präzisen Abstand des Objekts zur Röntgenquelle und Röntgendetektor betreffen. Eine genaue 3D-Rekonstruktion kann durch tomographische Rekonstruktionsverfahren erreicht werden, wofür eine große Anzahl an Röntgenbildern aus unterschiedlichen Positionen und Winkeln sowie eine präzise Konfiguration der Röntgenvorrichtung nötig ist.

Die präzise Konfiguration der Röntgenvorrichtung wird durch die geometrische Konstruktion und geometrische Kalibrierung der Röntgenvorrichtung erreicht. In industriellen Anwendungen werden häufig mobile Röntgensysteme genutzt. In diesem Fall sind sowohl die Positionen der Röntgenquelle und des Röntgendetektors als auch das zu inspizierende Objekt beliebig. In diesem Fall ist daher keine präzise Konfiguration der Röntgenvorrichtung gegeben.

Aus dem Stand der Technik bekannt sind beispielsweise C-Arme für medizinische Anwendungen. Dabei können Ungenauigkeiten in der Konfiguration der Röntgenvorrichtung zu einer schlechten Bildqualität tomographisch rekonstruierte Bilder führen. Zur Lösung dieses Problems sind die Nutzung eines Eichkörpers zur Kalibrierung sowie die Nutzung selbstkalibrierender Verfahren bekannt.

Der Eichkörper ist derart ausgestaltet, dass dessen Röntgenbild eindeutig identifizierbar ist und daraus Position und Orientierung der Röntgenquelle und des Röntgendetektors eindeutig ermittelbar ist. Verfahren zur Selbstkalibrierung sehen eine Analyse der Röntgenbilder vor. Beispielsweise wird das tomographisch rekonstruierte Bild geschätzt und geometrische Parameter werden iterativ optimiert, um ein optimales rekonstruiertes Bild zu erhalten.

Die DE 10 2006 011 008 A1 betrifft ein Verfahren zur Bereitstellung von korrigierten Projektionsdaten. Für eine anfängliche Registrierung wird a-priori Wissen vorgegeben. Anschließend wird eine virtuelle CT simuliert.

Die US 2013/01 77 230 A1 betrifft das Bestimmen einer Prognose eines Implantats mit einem medizinischen Bild. Ein Röntgenbild des Implantats wird mit einer Datenbank des Implantats verwirklichen. Die Pose des Implantats mit der größten Übereinstimmung gibt die Pose des Implantats in dem Röntgenbild vor.

Die US 2017/00 24 634 A1 beschreibt ein gefaltetes neuronales Netz zur regressionsbasierten 2D/3D-Registrierung medizinischer Bilder. Eine Parameterzone wird basierend auf Transformationsparametern, welche sich auf ein digital konstruiertes Röntgenbild beziehen, aus einem dreidimensionalen medizinischen Bild bestimmt. Basierend auf lokalen residualen Bildmerkmalen in dem digital konstruiertes Röntgenbild und einem Röntgenbild werden verbesserte Transformationsparameter berechnet.

Es ist Aufgabe der vorliegenden Erfindung, eine verbesserte tomographische Rekonstruktion eines Objekts zu ermöglichen.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der Unteransprüche. Vorteilhafte Ausführungsformen und zweckmäßige Weiterbildungen des erfindungsgemäßen Verfahrens gelten analog auch für die erfindungsgemäße Röntgenvorrichtung und umgekehrt.

Bei einem gattungsgemäßen Verfahren zum Ermöglichen einer tomographischen Rekonstruktion eines Objekts wird zunächst ein Röntgenstrahl durch eine Röntgeneinheit emittiert. Die Röntgeneinheit umfasst insbesondere einen Röntgendetektor und eine Röntgenquelle, durch welche der Röntgenstrahl emittiert wird.

In einem anderen Schritt wird eine Dämpfung des Röntgenstrahls beim Transmittieren des Objekts, welche sich in einem Strahlengang des Röntgenstrahls der Röntgeneinheit befindet, ermittelt. Die Dämpfung des Röntgenstrahls wird durch den Röntgendetektor ermittelt. Beispielsweise nimmt der Röntgendetektor ein zweidimensionales Röntgenbild auf, wobei Teile, insbesondere Bildpunkte oder Pixel, des Röntgenbildes mit einer Intensität ausgeleuchtet werden, die von der Dämpfung des Röntgenstrahls abhängt. Somit kann die Dämpfung des Röntgenstrahls in Form des Röntgenbildes ermittelt werden. Alternativ oder zusätzlich kann die Dämpfung durch Erfassen einer Restintensität des Röntgenstrahls nach dem Transmittieren des Objekts ermittelt werden. Das Röntgenbild kann einer zweidimensionalen Projektion der Restintensität des Röntgenstrahls nach dem Transmittieren des, insbesondere dreidimensionalen, Objekts auf eine Bildebene des Röntgenbildes entsprechen.

Anhand der Dämpfung des Röntgenstrahls werden Strukturdaten des Objekts ermittelt. Beispielsweise können anhand der Dämpfung eine Materialstärke, eine Materialart und/oder ein Absorptionskoeffizienten für das Objekt ermittelt werden.

Um nun eine verbesserte tomographische Rekonstruktion des Objekts zu ermöglichen, ist erfindungsgemäß vorgesehen, dass anhand eines digitalen Modells Objekts sowie anhand der Dämpfung des Röntgenstrahls eine Pose der Röntgeneinheit relativ zu dem Objekt zum Ermöglichen der tomographischen Rekonstruktion ermittelt wird. Insbesondere wird die Dämpfung des Röntgenstrahls mit dem digitalen Modell in Bezug gesetzt, um die Pose der Röntgeneinheit relativ zu dem Objekt zu ermitteln. Als Pose ist insbesondere eine Kombination aus relativer Position und Ausrichtung zu verstehen. Insbesondere wird die Pose des Objekts relativ zu dem Röntgendetektor und/oder zu der Röntgenquelle ermittelt. Alternativ oder zusätzlich kann die Pose des Objekts relativ zu der Röntgeneinheit ermittelt werden. Dadurch, dass mittels des vorliegenden Verfahrens die Pose der Röntgeneinheit besonders vorteilhaft ermittelt wird, ist eine verbesserte tomographische Rekonstruktion des Objekts ermöglicht.

Es ist vorgesehen, dass anhand des digitalen Modells des Objekts Modellwerte für die Dämpfung des Röntgenstrahls beim Transmittieren des Objekts für mehrere Posen der Röntgeneinheit relativ zu dem Objekt berechnet werden. Beispielsweise werden Modellwerte für die Dämpfung des Röntgenstrahls anhand eines physikalischen Modells und/oder im Rahmen einer Simulation berechnet. Vorzugsweise werden die Modellwerte für eine Vielzahl von Posen der Röntgeneinheit, insbesondere der Röntgenquelle, auf einer modellhaften Kugelsphäre berechnet. Die Modellwerte können eine Basis für das ermitteln der Pose der Röntgenquelle relativ zu dem Objekt bilden.

Es ist vorgesehen, dass anhand der Modellwerte, welche Paare an Modellbildern sowie der zu den Modellbildern gehörigen jeweiligen Modellpose umfassen, eine Einrichtung zum maschinellen Lernen, insbesondere ein künstliches neuronales Netz, dazu angelernt wird, die Pose der Röntgeneinheit relativ zu dem Objekt anhand der ermittelten Dämpfung des Röntgenstrahls zu ermitteln. Vorzugsweise handelt es sich bei der Einrichtung zum maschinellen Lernen, insbesondere dem künstlichen neuronalen Netz, um ein Convolutional Neural Network, im Deutschen selten auch als faltendes neurales Netz bezeichnet. Die Modellwerte können somit Trainingsdaten zum Anlernen der Einrichtung zum maschinellen Lernen bilden. Anhand der Modellwerte kann die Einrichtung zum maschinellen Lernen Gesetzmäßigkeiten, Zusammenhänge oder Verbindungen zwischen Pose der Röntgeneinheit relativ zu dem Objekt und der Dämpfung des Röntgenstrahls erlernen beziehungsweise erkennen.

Die Pose der Röntgeneinheit relativ zu dem Objekt ist gleichwertig zu der Pose des Objekts relativ zu der Röntgeneinheit. Somit ist im Rahmen der vorliegenden Patentanmeldung unter der Pose des Objekts relativ zu dem Röntgendetektor stets auch umgekehrt die Pose des Röntgendetektors oder eines Teils des Röntgendetektors, insbesondere der Röntgenquelle oder des Röntgendetektors, relativ zu dem Objekt zu verstehen.

Eine Weiterbildung sieht vor, dass die Röntgeneinheit die Röntgenquelle und den Röntgendetektor umfasst, wobei eine Relativposition von Röntgenquelle, Objekt und Röntgendetektor unter Einhaltung der Bedingung, dass sich das Objekt in dem Strahlengang der Röntgeneinheit befindet, frei gewählt wird. Mit anderen Worten gibt es keine festgelegte Relativposition, in welcher sich der Röntgendetektor und die Röntgenquelle oder Röntgendetektor, Röntgenquelle und Objekt befinden müssen. Insbesondere kann eine Position der Röntgenquelle unabhängig von einer Position des Röntgendetektors und/oder einer Position des Objekts gewählt werden.

Eine Weiterbildung sieht vor, dass die Pose der Röntgeneinheit relativ zu dem Objekt zumindest teilweise durch Vergleichen der ermittelten Dämpfung des Röntgenstrahls mit den Modellwerten ermittelt wird. Beispielsweise wird die Pose der Röntgeneinheit relativ zu dem Objekt dadurch ermittelt, dass diejenige aus den Posen, für welche Modellwerte berechnet wurden, als die Pose der Röntgeneinheit relativ zu dem Objekt ermittelt wird, deren Modellwerte für die Dämpfung die geringste Abweichung von der ermittelten Dämpfung aufweisen. Mit anderen Worten kann aus den Posen, für welche die Modellwerte berechnet wurden, diejenige Pose ausgewählt werden, deren Modellwerte für die Dämpfung die geringste Abweichung von der ermittelten Dämpfung aufweisen. Alternativ oder zusätzlich kann eine Extrapolation anhand der Modellwerte und anhand der Posen, für welche Modellwerte berechnet wurden, erfolgen, um die Pose der Röntgeneinheit relativ zu dem Objekt noch genauer zu bestimmen.

Eine Weiterbildung sieht vor, dass die Einrichtung zum maschinellen Lernen, insbesondere das künstliche neuronale Netz, durch Fehlerrückführung weiter angelernt wird. Insbesondere wird anhand des Vergleichens der Modellwerte mit der ermittelten Dämpfung des Röntgenstrahls die Fehlerrückführung durchgeführt. Alternativ oder zusätzlich können durch Extrapolation anhand der Modellwerte gewonnene Daten genutzt werden, um die Modellwerte zu erweitern. Auf diese Weise kann die Genauigkeit beim Ermitteln der Pose der Röntgeneinheit relativ zu dem Objekt verbessert werden.

Erfindungsgemäß wird für die ermittelte Pose der Röntgeneinheit relativ zu dem Objekt Projektionswerte für die Dämpfung des Röntgenstrahls berechnet und mit der ermittelten Dämpfung des Röntgenstrahls verglichen. Mit anderen Worten werden anhand des digitalen Modells des Objekts sowie anhand der ermittelten Pose Projektionswerte für die Dämpfung des Röntgenstrahls berechnet. Die Projektionswerte können nach derselben Vorschrift berechnet werden wie die Modellwerte. Beispielsweise werden die Projektionswerte in Form eines Projektionsbildes berechnet, wobei das Projektionsbild insbesondere einer Simulation für ein Röntgenbild entspricht. Das Projektionsbild kann mit dem Röntgenbild, das durch den Röntgendetektor aufgenommen wird, verglichen werden. Je nach Grad der Übereinstimmung zwischen Projektionsbild und Röntgenbild kann auf die Güte der Ermittlung der Pose der Röntgeneinheit relativ zu dem Objekt geschlossen werden. Umso besser die Übereinstimmung zwischen dem Projektionsbild und dem Röntgenbild ist, als umso besser kann die Güte der Ermittlung der Pose der Röntgeneinheit relativ zu dem Objekt angesehen werden.

Erfindungsgemäß wird ein zweistufiges Verfahren verwendet, bei welchem zunächst die Pose der Röntgeneinheit relativ zu dem Objekt anhand der Modellwerte für die Dämpfung des Röntgenstrahls und der ermittelten Dämpfung des Röntgenstrahls ermittelt wird. Anschließend werden anhand der ermittelten Pose der Röntgeneinheit relativ zu dem Objekt die Projektionswerte für die Dämpfung berechnet und mit der ermittelten Dämpfung des Röntgenstrahls verglichen. Somit erfolgt eine zweistufige Verifizierung für die Pose der Röntgeneinheit relativ zu dem Objekt.

Eine Weiterbildung sieht vor, dass die Berechnung der Projektionswerte und/oder Ermittlung der Pose der Röntgeneinheit relativ zu dem Objekt durch Fehlerrückführung anhand des Vergleichs der Projektionswerte mit der ermittelten Dämpfung weiter angelernt wird. Beispielsweise werden Rechenvorschriften zum Berechnen der Projektionswerte und/oder Rechenvorschriften zum Ermitteln der Pose der Röntgeneinheit relativ zu Objekt derart angepasst, dass eine möglichst geringe oder minimal erreichbare Abweichung zwischen den Projektionswerten für die Dämpfung des Röntgenstrahls und der ermittelten Dämpfung des Röntgenstrahls erreicht wird. Vorzugsweise werden durch das zweistufige Verfahren Fehler beim Ermitteln der Pose der Röntgeneinheit besonders effektiv minimiert.

Ein zweiter Aspekt der Erfindung betrifft eine Röntgenvorrichtung mit einer Röntgenquelle zum Emittieren eines Röntgenstrahls und einem Röntgendetektor zum Ermitteln einer Dämpfung des Röntgenstrahls durch ein im Strahlengang des Röntgenstrahls befindliches Objekt. Die Röntgenvorrichtung umfasst außerdem eine Recheneinheit, die dazu eingerichtet ist, anhand der Dämpfung des Röntgenstrahls Strukturdaten des Objekts zu ermitteln.

Erfindungsgemäß ist vorgesehen, dass die Röntgenvorrichtung eine Speichereinheit aufweist, auf welcher ein digitales Modell des Objekts speicherbar ist. Außerdem ist die Recheneinheit erfindungsgemäß dazu eingerichtet, anhand der detektierten Dämpfung des Röntgenstrahls und des digitalen Modells eine Pose der Röntgeneinheit relativ zu dem Objekt zu ermitteln. Insbesondere ist das digitale Modell des Objekts in der Speichereinheit gespeichert. Vorzugsweise ist das digitale Modell des Objekts in der Speichereinheit dann gespeichert, wenn eine tomographische Rekonstruktion des Objektes 4 erfolgen soll.

Eine Weiterbildung der Röntgenvorrichtung sieht vor, dass die Recheneinheit eine Einrichtung zum maschinellen Lernen, insbesondere ein künstliches neuronales Netz, umfasst.

Weitere Merkmale und Vorteile sind der folgenden Beschreibung anhand der beigefügten Figuren zu entnehmen. In den Figuren bezeichnen gleiche Bezugszeichen gleiche Merkmale und Funktionen. Die Ausführungsbeispiele dienen lediglich der Erläuterung der Erfindung und sollen diese nicht beschränken.

Es zeigen:

Figur 1    in einem Blockdiagramm eine Röntgenvorrichtung mit einer Röntgenquelle und einem Röntgendetektor;

Figur 2    ein Blockdiagramm einer Ausführungsform des erfindungsgemäßen Verfahrens.

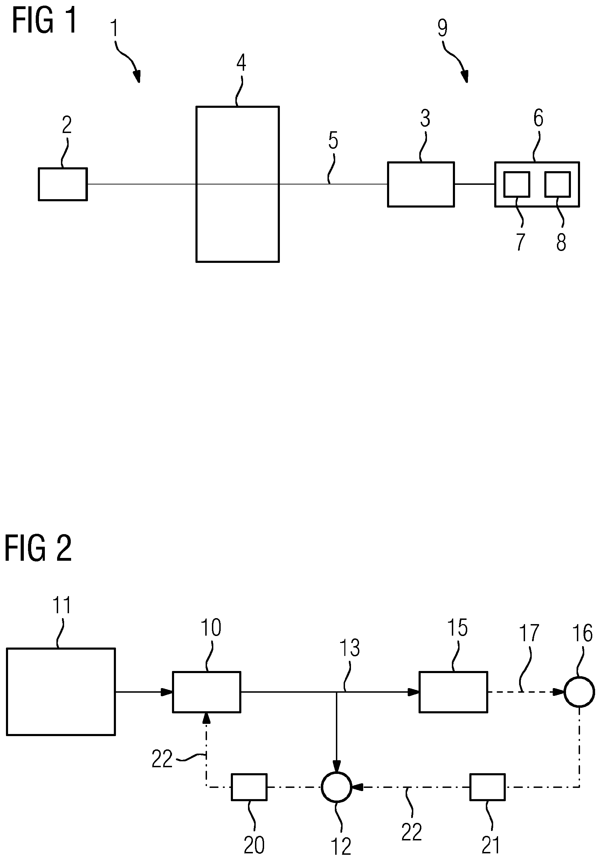

Figur 1 zeigt eine Röntgenvorrichtung 9 mit einer Röntgeneinheit 1. Die Röntgeneinheit 1 umfasst eine Röntgenquelle 2 und einen Röntgendetektor 3. Die Röntgenquelle 2 emittiert einen Röntgenstrahl 5 in Richtung des Röntgendetektors 3. Beispielsweise handelt es sich bei der Röntgenquelle 2 um eine Röntgenröhre mit Kupfer-Anode. In einem Strahlengang des Röntgenstrahls 5 befindet sich das Objekt 4. Insbesondere handelt es sich bei dem Objekt 4 um ein Prüfobjekt. Beispielsweise soll zum Prüfen des Objekts 4 ein tomographisches Abbild desselben erstellt werden.

Einzelteile der Röntgeneinheit 1, insbesondere die Röntgenquelle 2 und der Röntgendetektor 3, können einzeln bewegbar sein. Insbesondere kann eine Position der Röntgenquelle 2 und/oder des Röntgendetektors 3 frei gewählt werden unter der Bedingung, dass sich das Objekt 4 in dem Strahlengang des Röntgenstrahls 5 befindet. Somit kann die Röntgeneinheit 1 frei um das Objekt 4 herum angeordnet werden. Beispielsweise ist auf diese Weise eine Prüfung besonders großer Objekte 4, beispielsweise eines Rotors für eine Windkraftanlage, möglich.

Bei dem Röntgenstrahl 5 handelt es sich insbesondere um eine elektromagnetische Welle vorbestimmter Wellenlänge. Beispielsweise weisen Röntgenphotonen des Röntgenstrahls 5 eine Energie zwischen 5 keV und mehreren 100 keV auf. Bei dem Röntgenstrahl 5 kann es sich um monochromatische oder polychromatische Röntgenstrahlung handeln.

Der Röntgenstrahl 5 transmittiert das Objekt 4. Mit anderen Worten wird das Objekt 4 durch den Röntgenstrahl 5 durchleuchtet. Beim Transmittieren des Objektes 4 wird der Röntgenstrahls 5 gedämpft. Insbesondere wird eine Amplitude des Röntgenstrahls 5 gedämpft beziehungsweise verringert. Beispielsweise fällt die Amplitude des Röntgenstrahls 5 beim Transmittieren des Objekts 4 exponentiell ab.

Der Röntgendetektor 3 umfasst beispielsweise eine Photodiode, einen CCD-Sensor oder eine Photoplatte. Der Röntgenstrahls 5 wird durch den Röntgendetektor 3 detektiert. Insbesondere ermittelt der Röntgendetektor 3 die Dämpfung des Röntgenstrahls 5 bei der Transmission des Objekts 4. Vorzugsweise wird durch den Röntgendetektor 3 ein Röntgenbild aufgenommen. Das Röntgenbild kann die Dämpfung des Röntgenstrahls in einer Detektionsebene des Röntgendetektors darstellen. Insbesondere ist die Dämpfung des Röntgenstrahls in der Detektionsebene durch Graustufen des Röntgenbildes dargestellt.

Die Röntgenvorrichtung 9 kann eine Recheneinheit 6 zum Ermitteln von Strukturdaten des Objekts 4 umfassen. Strukturdaten des Objekts 4 betreffen beispielsweise eine durch den Röntgenstrahl 5 durchleuchtete Schichtdicke, Stoffmenge oder Dichte. Aufgrund der freien Bewegbarkeit der Röntgenquelle 2 und des Röntgendetektors 3 zueinander ist zum Ermöglichen einer tomographischen Rekonstruktion des Objekts 4 zunächst das Ermitteln der Pose der Röntgeneinheit 1, insbesondere der Röntgenquelle 2 und/oder des Röntgendetektors 3, relativ zu dem Objekt 4 nötig. Bei der Pose handelt es sich insbesondere um Position und Orientierung der Röntgeneinheit 1 relativ zu dem Objekt 4. Die Pose der Röntgeneinheit 1, insbesondere der Röntgenquelle 2 und/oder des Röntgendetektors 3, relativ zu dem Objekt 4 ist gleichbedeutend mit der Pose des Objekts 4 relativ zu der Röntgeneinheit 1, insbesondere der Röntgenquelle 2 und/oder dem Röntgendetektor 3.

Vorliegend umfasst die Recheneinheit 6 eine Einrichtung 7 zum maschinellen Lernen sowie eine Speichereinheit 8. Die Recheneinheit 6 kann einen Programmspeicher zum Speichern eines ausführbaren Programmcodes umfassen. In der Speichereinheit 8 ist vorliegend ein digitales Abbild x des Objekts 4 gespeichert. Beispielsweise ist das Objekt 4 anhand des digitalen Abbildes x hergestellt worden. Anhand der tomographischen Rekonstruktion des Objekts 4 soll beispielsweise die korrekte Herstellung des Objekts 4 überprüft werden. Beispielsweise handelt es sich bei dem digitalen Abbild x um ein CAD-Modell oder einen Bauplan. Die Einrichtung 7 zum maschinellen Lernen kann als künstliches neuronales Netz, insbesondere als "Convolutional Neural Network", im Deutschen selten auch als faltendes neurales Netz bezeichnet, ausgebildet sein.

Eine gemeinsame Optimierung von Kalibrierung der Röntgeneinheit 1 und der tomographischen Rekonstruktion des Objekts 4 ist ein Problem welches durch wenige Bedingungen definiert ist. In industriellen Anwendungen ist für das Objekt 4 häufig das digitale Abbild x verfügbar. Vorliegend wird das digitale Abbild x als Ausgangsinformation genutzt. Insbesondere wenn die Röntgeneinheit 1 nicht kalibriert ist, ist die Nutzung des digitalen Abbildes x vorteilhaft.

Anhand des digitalen Abbildes x des Objekts 4 werden Modellwerte 11 für die Dämpfung des Röntgenstrahls 5 für verschiedene Posen der Röntgeneinheit 1, insbesondere der Röntgenquelle 2, relativ zu dem Objekt 4 berechnet. Beispielsweise werden Modellbilder berechnet, wobei es sich bei den Modellbildern um berechnete Röntgenbilder handelt. Mit anderen Worten können anhand des digitalen Abbildes x Objekts 4 die Modellbilder des Objekts 4 als die Modellwerte 11 berechnet werden. Vorzugsweise wird eine Vielzahl an Modellwerten 11 für eine Vielzahl an Modellposen der Röntgeneinheit 1, insbesondere der Röntgenquelle 2, relativ zu dem Objekt 4 berechnet. Die Modellposen können beispielsweise gemäß einer Kugelsphäre um das Objekt 4 herum angeordnet sein. Beispielsweise ist die Röntgeneinheit 1 gemäß der Modellposen derart angeordnet, dass sich der Röntgendetektor 3 auf der Kugelsphäre stets gegenüberliegend zu der Röntgenquelle 2 befindet.

Die Einrichtung 7 zum maschinellen Lernen wird anhand der Modellwerte 11 angelernt. Beispielsweise kann die Einrichtung 7 zum maschinellen Lernen eine Ermittlungseinheit 10 zum Ermitteln der Pose der Röntgeneinheit 1, insbesondere der Röntgenquelle 2, relativ zu dem Objekt 4 umfassen. Die Ermittlungseinheit 10 kann als Programmcode, welcher beispielsweise in der Recheneinheit 6 oder der Einrichtung 7 zum maschinellen Lernen gespeichert ist und/oder ausgeführt wird, realisiert sein. Insbesondere wird die Ermittlungseinheit 10 anhand der Modellwerte 11 angelernt.

Die Ermittlungseinheit 10 kann dazu ausgebildet sein, anhand der Modellwerte 11, welche als Trainingsdaten $D$ zum maschinellen Lernen dienen können, Modellparameter $\omega$ zu erlernen und/oder zu verfeinern. Vorliegend umfasst die Ermittlungseinheit 10 ein "deep learning model" $f(\cdot)$, zu deutsch "tiefgehendes Lernmodell". Dass deep learning model $f(\cdot)$ wird anhand der Modellwerte 11 angelernt beziehungsweise trainiert. Die Modellwerte 11 umfassen beispielsweise eine Menge an Trainingsdaten $D = \{(b_1, p_1), \ldots (b_N, p_N)\}$. Die Trainingsdaten $D$ umfassen Paare an Modellbildern $b_i$ sowie der zu den Modellbildern gehörigen Modellpose $p_i$. Die Modellpose $p_i$ beschreibt die Pose der Röntgeneinheit 1, insbesondere der Röntgenquelle 2, relativ zu dem Objekt 4, für welche ein jeweiliges Modellbild $b_i$ berechnet wird.

Für die Modellbilder gilt $b_i = vec(I_{Xray}) \in \mathbb{R}^m$, wobei $vec(\cdot)$ einen Vektorisierungsoperator und $m$ die Dimension des Modellbildes beschreibt. Für die Modellpose $p_i$ gilt $p_i \in \mathbb{R}^d$, wobei die Modellpose $p_i$ als Vektor im $d$-dimensionalen Raum aufzufassen ist. $\mathbb{R}$ ist vorliegend die Menge der reellen Zahlen.

Die Pose $p$ ist vorliegend festgelegt durch die Orientierung $q$ und die Position $t$ der Röntgenquelle 2. Die Orientierung $q$ wird vorliegend in Quaternionen $(q_1, q_2, q_3, q_4)$ und die Position $t$ in kartesischen Koordinaten $(t_x, t_y, t_z)$ beschrieben. Die Quaternionen $(q_1, q_2, q_3, q_4)$ beschreiben dabei die drei Rotationsfreiheitsgrade bezüglich der kartesischen Koordinatenachsen (x,y,z). Alternativ kann die Orientierung $q$ beispielsweise in Eulerwinkeln und/oder die Position $t$ in Kugelkoordinaten beschrieben werden. Insgesamt gibt es für die Pose $p$ sechs Freiheitsgrade (drei bezüglich Translation, drei bezüglich Rotation). Dies gilt selbstverständlich analog für die Modellpose $p_i$.

$$p = [q, t] = (q_1, q_2, q_3, q_4, t_x, t_y, t_z)$$

Durch die Ermittlungseinheit 10 wird die Pose $\hat{p}$, insbesondere ein Posenvektor, der Röntgeneinheit 1, insbesondere der Röntgenquelle 2, anhand eines durch die Röntgeneinheit 1 erfassten Röntgenbildes $b$ ermittelt. Mit anderen Worten wird mittels des deep learning models f(·) auf Basis des erfassten Röntgenbildes $b$ sowie der Modellparameter $\omega$ die Pose $\hat{p}$ ermittelt:

$$\hat{p} = f(b; \omega)$$

Die ermittelte Pose $\hat{p}$ kann später für die tomographische Rekonstruktion genutzt werden. Die tomographische Rekonstruktion kann durch folgendes mathematisches Problem ausgedrückt werden. Dabei ist $A(\cdot)$ der Projektionsoperator, $x$ das digitale Abbild $x$ des Objekts 4 und $R(\cdot)$ ein Regulierungsterm:

$$\underset{x}{arg\,min} \,\|b - A(\hat{p})x\|^2 + R(x)$$

Eine Optimierungsfunktion $\mathcal{L}_{pose}$ zum Ermitteln der Pose ist wie folgt definiert:

$$\mathcal{L}_{pose} = \|t - \hat{t}\|^2 + \beta \left\|q - \frac{\hat{q}}{\|\hat{q}\|}\right\|^2$$

Die Optimierungsfunktion $\mathcal{L}_{pose}$ kann mittels der Modellwerte 11, welche die Trainingsdaten $D$ bilden angelernt werden. Dazu werden beispielsweise die verschiedenen Paare $(b_i, p_i)$ an Modellbildern $b_i$ und Modellposen $p_i$ in die Optimierungsfunktion $\mathcal{L}$ eingesetzt. Zu beachten ist an obiger Formel, dass die Quaternionen $\hat{q}$ für die ermittelte Pose $\hat{p}$ normalisiert werden. Bei $\hat{t}$ handelt es sich um die kartesischen Koordinaten der ermittelten Pose $\hat{p}$. $\beta$ ist ein Gewichtungsfaktor zum Gewichten der kartesischen Koordinaten und der Quaternionen. In der Figur 2 ist die Optimierungsfunktion $\mathcal{L}_{pose}$ durch einen ersten Punkt 12 repräsentiert. Nach dem Anlernen der Ermittlungseinheit 10 kann diese die Pose der Röntgeneinheit 1, insbesondere der Röntgenquelle 2, ermitteln.

Durch eine erste Fehlerrückführung 20, auch "Backpropagation" genannt, können die Modellparameter $\omega$ des deep learning models f(·) angepasst werden. Figur 2 sieht hierfür einen Fehlerrückführungspfad 22 vor. Die erste Fehlerrückführung 20 erfolgt insbesondere durch Bildung eines Gradienten, vorzugsweise der Optimierungsfunktion $\mathcal{L}_{pose}$. Vorliegend erfolgt die Optimierung der Modellparameter $\omega$ durch die erste Fehlerrückführung 20 direkt anhand der Optimierungsfunktion $\mathcal{L}_{pose}$. Durch die Bildung des Gradienten kann beispielsweise ein Minimum für den Fehler beim Ermitteln der Pose $\hat{p}$ gefunden werden. Auf diese Weise kann die Genauigkeit der Ermittlung der Pose $\hat{p}$ durch Minimierung des Fehlers anhand bekannter Posen, insbesondere der Modellposen $p_i$, gesteigert werden:

$$\frac{\partial \mathcal{L}_{pose}}{\partial \hat{p}} = \left[\frac{\partial \mathcal{L}_{pose}}{\partial \hat{q}}, \frac{\partial \mathcal{L}_{pose}}{\partial \hat{t}}\right] = \left(\frac{\partial}{\partial \hat{q_1}}, ..., \frac{\partial}{\partial \hat{t_x}}, ...\right)$$

Um die Genauigkeit beim Ermitteln der Pose der Röntgeneinheit 1, insbesondere der Röntgenquelle 2, weiter zu verbessern, ist zusätzlich ein Projektor 15 vorgesehen. Umso genauer die Pose der Röntgeneinheit 1, insbesondere der Röntgenquelle 2, mittelt wird, desto genauer kann die tomographische Rekonstruktion des Objekts 4 erfolgen.

Der Projektor 15 kann Teil der Einrichtung 7 zum maschinellen Lernen sein. Der Projektor 15 kann als Programmcode, welcher beispielsweise in der Recheneinheit 6 oder der Einrichtung 7 zum maschinellen Lernen gespeichert ist und/oder ausgeführt wird, realisiert sein. Durch den Projektor 15 können aus der ermittelten Pose $\hat{p}$ sowie dem digitalen Abbild $x$ des Objekts 4 Projektionswerte für die Dämpfung des Röntgenstrahls 5 durch das Objekt 4 berechnet werden. Insbesondere wird ein Projektionsbild $\hat{b}$ berechnet, wobei das Projektionsbild $\hat{b}$ einem Röntgenbild entspricht, das für die Röntgeneinheit 1, insbesondere die Röntgenquelle 2, in der ermittelten Pose $\hat{p}$ anhand des digitalen Abbilds $x$ des Objekts 4 berechnet wird.

$$\hat{b} = A(\hat{p})x$$

Durch Definition eines Projektionsfehlers $\mathcal{L}_{recon}$ kann die Optimierungsfunktion $\mathcal{L}_{pose}$ eingeschränkt werden. Der Projektionsfehler $\mathcal{L}_{recon}$ ist in Figur 2 durch einen zweiten Kreis 16 repräsentiert. Beispielsweise kann die Optimierungsfunktion $\mathcal{L}_{pose}$ unter Minimierung des Projektionsfehlers $\mathcal{L}_{recon}$ als Nebenbedingung optimiert werden. Vorliegend wird als Nebenbedingung angenommen, dass der Projektionsfehler $\mathcal{L}_{recon}$ einen vorbestimmten Grenzwert $\varepsilon$ nicht überschreitet (s.t. kurz für "subject to", zu deutsch sinngemäß "unter der Bedingung, dass") :

$$\underset{\hat{t},\hat{q}}{argmin} \ \|t - \hat{t}\|^2 + \beta \left\| q - \frac{\hat{q}}{\|\hat{q}\|} \right\|^2 , s.t. \|b - \hat{b}\|^2 \le \epsilon$$

Mit anderen Worten dürfen das Projektionsbild $\hat{b}$ für die ermittelte Pose $\hat{p}$ und das tatsächliche Bild $b$ maximal um den vorbestimmten Grenzwert $\varepsilon$ voneinander abweichen. Das tatsächliche Bild $b$ kann je nach Betriebsmodus oder Lernmodus Die Optimierungsfunktion $\mathcal{L}_{pose}$ mit der Nebenbedingung betreffend den Projektionsfehler $\mathcal{L}_{recon}$ kann mittels eines Lagrange-Multiplikators $\lambda$ in ein Optimierungsproblem ohne Nebenbedingung umgewandelt werden:

$$\underset{\hat{t},\hat{q}}{argmin} \ \|t - \hat{t}\|^2 + \beta \left\| q - \frac{\hat{q}}{\|\hat{q}\|} \right\|^2 + \lambda \|b - \hat{b}\|^2$$

Wobei

$$\mathcal{L}_{pose} = \|t - \hat{t}\|^2 + \beta \left\| q - \frac{\hat{q}}{\|\hat{q}\|} \right\|^2$$
$$\mathcal{L}_{recon} = \lambda \|b - \hat{b}\|^2$$

Durch eine zweite Fehlerrückführung 21 kann die erste Fehlerrückführung 20 ersetzt oder erweitert werden. Insbesondere werden die Modellparameter $\omega$ sowohl mittels der ersten Fehlerrückführung 20 als auch mittels der zweiten Fehlerrückführung 21 angepasst beziehungsweise angelernt. Somit kann das deep learning model f($\cdot$) sowohl anhand des Gradienten der Optimierungsfunktion $\mathcal{L}_{pose}$ als auch anhand eines Gradienten des Projektionsfehlers $\mathcal{L}_{recon}$ angepasst beziehungsweise angelernt werden. Die zweite Fehlerrückführung 21 kann mittels folgender Gradienten erfolgen:

$$\frac{\partial \mathcal{L}}{\partial \hat{p}} = \frac{\partial \mathcal{L}_{pose}}{\partial \hat{p}} + \lambda \frac{\partial \mathcal{L}_{recon}}{\partial \hat{p}}$$

Aufgrund der Kettenregel ergibt sich folgender Term:

$$\frac{\partial \mathcal{L}_{recon}}{\partial \hat{p}} = \frac{\partial \mathcal{L}_{recon}}{\partial \hat{b}} \cdot \frac{A(\hat{p})x}{\partial \hat{p}}$$

Aufgrund der Art des Projektionsoperators $A(\cdot)$ ist es nicht möglich, den Gradienten des Projektionsfehlers $\mathcal{L}_{recon}$ in Bezug auf die Pose analytisch zu berechnen. Daher wird der Gradient numerisch durch Differenzialrechnung für jeden Parameter einzeln approximiert. Beispielsweise lässt sich die partielle Ableitung der kartesischen Koordinaten $\hat{t}$ entlang der z-Achse wie folgt berechnen, wobei $h$ eine kleine, konstante Zahl beschreibt, welche $\varepsilon$ angenähert wird:

$$\frac{A(\hat{p})}{\partial \hat{t_z}} = \lim_{h \to \epsilon} \frac{A\big((\ldots, \hat{t_z} + h)\big) - A\big((\ldots, \hat{t_z} - h)\big)}{2h}$$

Zuletzt sollten die Grundzüge der vorliegenden Ausführungsform noch einmal zusammengefasst werden: Für die tomographische Rekonstruktion des Objekts 4 ist die Kenntnis der genauen Pose der Röntgeneinheit 1, insbesondere der Röntgenquelle 2, relativ zu dem Objekt 4 nötig. Da die Einzelteile der Röntgeneinheit 1, insbesondere die Röntgenquelle 2 und der Röntgendetektor 3, frei bewegbar sind und frei bezüglich dem Objekt 4 positioniert werden, ist die Bestimmung der Pose nötig, um die tomographische Rekonstruktion zu ermöglichen. Hierzu werden anhand eines digitalen Abbildes $x$ des Objekts 4 Modellwerte 11 berechnet, wobei die Modellwerte 11 simulierte Röntgenbilder für eine Mehrzahl an Modellpose $p_i$ der Röntgeneinheit 1, insbesondere der Röntgenquelle 2, umfassen. Die Modellwerte 11 dienen als Trainingsdaten $D$ zum Anlernen der Einrichtung 7 zum maschinellen Lernen. Nach dem Anlernen der Einrichtung 7 zum maschinellen Lernen ist diese in einem ersten Pfad 13 in der Lage, die Pose der Röntgeneinheit 1, insbesondere der Röntgenquelle 2, anhand eines Röntgenbildes der Röntgeneinheit 1 zu ermitteln.

Zum Verifizieren der ermittelten Pose $\hat{p}$ wird in einem zweiten Pfad 17 anhand des digitalen Abbildes $x$ ein Projektionsbild $\hat{b}$ für die ermittelte Pose $\hat{p}$ berechnet. Das Projektionsbild $\hat{b}$ wird mit dem Röntgenbild $b$ der Röntgeneinheit 1 verglichen.

Über einen Fehlerrückführungspfad 22 kann die Einrichtung 7 zum maschinellen Lernen über eine erste Fehlerrückführung 20 und/oder eine zweite Fehlerrückführung 21 angepasst beziehungsweise weiter angelernt werden. Insbesondere erfolgt die Fehlerrückführung jeweils anhand von Fehlerminimierung durch Gradientenbildung.

**Patentansprüche**

1. Verfahren zum Ermöglichen einer tomographischen Rekonstruktion, mit den Schritten:

   - Emittieren eines Röntgenstrahls (5) durch eine Röntgeneinheit (1),
   - Ermitteln einer Dämpfung des Röntgenstrahls (5) beim Transmittieren des Objekts (4), welches sich in einem Strahlengang des Röntgenstrahls (5) der Röntgeneinheit (1) befindet,
   - Ermitteln von Strukturdaten des Objekts (4) anhand der Dämpfung des Röntgenstrahls (5), wobei
   - anhand eines digitalen Modells des Objekts (4) sowie anhand der Dämpfung des Röntgenstrahls (5) eine Pose der Röntgeneinheit (1) relativ zu dem Objekt (4) zum Ermöglichen der tomographischen Rekonstruktion ermittelt wird,

   wobei

   - anhand des digitalen Modells des Objekts (4) Modellwerte (11) für die Dämpfung des Röntgenstrahls (5) beim Transmittieren des Objekts (4) für mehrere Posen der Röntgeneinheit (5) relativ zu dem Objekt (4) berechnet werden,
   - anhand der Modellwerte (11), welche Paare an Modellbildern sowie der zu den Modellbildern gehörigen jeweiligen Modellpose umfassen, eine Einrichtung (7) zum maschinellen Lernen dazu angelernt wird, die Pose der Röntgeneinheit (4) relativ zu dem Objekt (4) anhand der ermittelten Dämpfung des Röntgenstrahls (5) zu ermitteln; **dadurch gekennzeichnet, dass**
   - in einem zweistufigen Verfahren zunächst die Pose der Röntgeneinheit relativ zu dem Objekt anhand der Modellwerte für die Dämpfung des Röntgenstrahls und der ermittelten Dämpfung des Röntgenstrahls ermittelt wird und anschließend anhand der ermittelten Pose der Röntgeneinheit relativ zu dem Objekt die Projektionswerte für die Dämpfung berechnet und mit der ermittelten Dämpfung des Röntgenstrahls verglichen werden.

2. Verfahren nach Anspruch 1, **dadurch gekennzeichnet, dass** anhand des digitalen Modells des Objekts sowie anhand der ermittelten Pose die Projektionswerte für die Dämpfung des Röntgenstrahls in Form eines Projektionsbildes berechnet werden, wobei das Projektionsbild insbesondere einer Simulation für ein Röntgenbild entspricht.

3. Verfahren nach einem der vorhergehenden Ansprüche, **dadurch gekennzeichnet, dass** die Röntgeneinheit (1) eine Röntgenquelle (2) und einen Röntgendetektor (3) umfasst, wobei eine Relativposition von Röntgenquelle (2), Objekt (4) und Röntgendetektor (3) unter Einhaltung der Bedingung, dass sich das Objekt (4) in dem Strahlengang des Röntgenstrahls (5) befindet, frei gewählt wird.

4. Verfahren nach einem der vorhergehenden Ansprüche, **dadurch gekennzeichnet, dass** anhand der Modellwerte (11) ein künstliches neuronales Netz dazu angelernt wird, die Pose der Röntgeneinheit (4) relativ zu dem Objekt (4) anhand der ermittelten Dämpfung des Röntgenstrahls (5) zu ermitteln.

5. Verfahren nach einem der vorhergehenden Ansprüche, **dadurch gekennzeichnet, dass** die Pose der Röntgeneinheit (1) relativ zu dem Objekt (4) zumindest teilweise durch Vergleichen der ermittelten Dämpfung des Röntgenstrahls (5) mit den Modellwerten (11) ermittelt wird.

6. Verfahren nach Anspruch 5, **dadurch gekennzeichnet, dass** die Einrichtung (7) zum maschinellen Lernen, insbesondere das künstliche neuronale Netz, durch Fehlerrückführung (20) weiter angelernt wird.

7. Verfahren nach einem der vorhergehenden Ansprüche, **dadurch gekennzeichnet, dass** für die ermittelte Pose der Röntgeneinheit (1) relativ zu dem Objekt (4) Projektionswerte für die Dämpfung des Röntgenstrahls (5) berechnet und mit der ermittelten Dämpfung des Röntgenstrahls (5) verglichen werden.

8. Verfahren nach Anspruch 7, **dadurch gekennzeichnet, dass** die Berechnung der Projektionswerte und/oder Ermittlung der Pose der Röntgeneinheit (1) relativ zu dem Objekt (4) durch Fehlerrückführung (21) anhand des Vergleichs der Projektionswerte mit der ermittelten Dämpfung weiter angelernt wird.

9. Röntgenvorrichtung (9), mit

   - einer Röntgenquelle (2) zum Emittieren eines Röntgenstrahls (5),
   - einem Röntgendetektor (3) zum Ermitteln einer Dämpfung des Röntgenstrahls (5) durch ein im Strahlengang des Röntgenstrahls (5) befindliches Objekt (4), und mit
   - einer Recheneinheit (6), welche dazu eingerichtet ist, anhand der Dämpfung des Röntgenstrahls (5) Strukturdaten des Objekts (4) zu ermitteln,

   **gekennzeichnet, durch**

   - eine Speichereinheit (8), auf welcher ein digitales Modell des Objekts (4) speicherbar ist,
   - wobei die Recheneinheit (6) eingerichtet ist, anhand der detektierten Dämpfung des Röntgenstrahls (5) und des digitalen Modells eine Pose der Röntgeneinheit (1) relativ zu dem Objekt (4) zu ermitteln

   **dadurch gekennzeichnet, dass**

   - die Röntgenvorrichtung (9) eingerichtet ist, ein Verfahren nach einem der Ansprüche 1 bis 8 durchzuführen.

10. Röntgenvorrichtung (1) nach Anspruch 9, **dadurch gekennzeichnet, dass** die Recheneinheit (6) eine Einrichtung (7) zum maschinellen Lernen, insbesondere ein künstliches neuronales Netz, umfasst.

**Claims**

1. Method for enabling a tomographic reconstruction, with the steps:

   - emitting an X-ray beam (5) by way of an X-ray unit (1),
   - determining an attenuation of the X-ray beam (5) while transmitting the object (4), said object being located in a beam path of the X-ray beam (5) of the X-ray unit (1),
   - determining structural data of the object (4) based on the attenuation of the X-ray beam (5), wherein
   - a pose of the X-ray unit (1) relative to the object (4) is determined to enable the tomographic reconstruction based on a digital model of the object (4) and based on the attenuation of the X-ray beam (5),

   wherein

   - model values (11) for the attenuation of the X-ray beam (5) while transmitting the object (4) are calculated for a plurality of poses of the X-ray unit (5) relative to the object (4) based on the digital model of the object (4),
   - based on the model values (11), which comprise pairs of model images as well as the respective model poses belonging to the model images, a facility (7) for machine learning is trained to determine the pose of the X-ray unit (4) relative to the object (4) based on the determined attenuation of the X-ray beam (5); **characterised in that**

- in a two-step method, the pose of the X-ray unit relative to the object is first determined based on the model values for the attenuation of the X-ray beam and the determined attenuation of the X-ray beam and the projection values for the attenuation are then calculated based on the determined pose of the X-ray unit relative to the object and are compared with the determined attenuation of the X-ray beam.

2. Method according to claim 1, **characterised in that** the projection values for the attenuation of the X-ray beam are calculated in the form of a projection image based on the digital model of the object and based on the determined pose, wherein the projection image corresponds in particular to a simulation for an X-ray image.

3. Method according to one of the preceding claims, **characterised in that** the X-ray unit (1) comprises an X-ray source (2) and an X-ray detector (3), wherein a relative position of X-ray source (2), object (4) and X-ray detector (3) are freely selected when the condition is met that the object (4) is located in the beam path of the X-ray beam (5).

4. Method according to one of the preceding claims, **characterised in that** an artificial neural network is trained on the basis of the model values (11) to determine the pose of the X-ray unit (4) relative to the object (4) based on the determined attenuation of the X-ray beam (5).

5. Method according to one of the preceding claims, **characterised in that** the pose of the X-ray unit (1) relative to the object (4) is determined at least partially by comparing the determined attenuation of the X-ray beam (5) with the model values (11).

6. Method according to claim 5, **characterised in that** the facility (7) for machine learning, in particular the artificial neural network, is trained further by way of backpropagation (20).

7. Method according to one of the preceding claims, **characterised in that** projection values for the attenuation of the X-ray beam (5) are calculated for the determined pose of the X-ray unit (1) relative to the object (4) and are compared with the determined attenuation of the X-ray beam (5).

8. Method according to claim 7, **characterised in that** the calculation of the projection values and/or determination of the pose of the X-ray unit (1) relative to the object (4) is trained further by way of backpropagation (21) based on the comparison of the projection values with the determined attenuation.

9. X-ray apparatus (9), with

   - an X-ray source (2) for emitting an X-ray beam (5),
   - an X-ray detector (3) for determining an attenuation of the X-ray beam (5) through an object (4) located in the beam path of the X-ray beam (5), and with
   - a computing unit (6), which is configured to determine structural data of the object (4) based on the attenuation of the X-ray beam (5),

   **characterised by**

   - a storage unit (8), on which a digital model of the object (4) can be stored,
   - wherein the computing unit (6) is configured to determine a pose of the X-ray unit (1) relative to the object (4) based on the detected attenuation of the X-ray beam (5) and the digital model

   **characterised in that**

   - the X-ray apparatus (9) is configured to carry out a method according to one of claims 1 to 8.

10. X-ray apparatus (1) according to claim 9, **characterised in that** the computing unit (6) comprises a facility (7) for machine learning, in particular an artificial neural network.

**Revendications**

1. Procédé pour rendre possible une reconstruction tomodensitométrique, comprenant les stades :

- émission d'un rayonnement (5) X par une unité (1) de rayons X,
- détermination d'une atténuation du rayonnement (5) X à la traversée de l'objet (4), qui se trouve dans le chemin du rayonnement (5) X de l'unité (1) de rayons X,
- détermination de données de structure de l'objet (4) à l'aide de l'atténuation du rayonnement (5) X, dans lequel
- à l'aide d'un modèle numérique de l'objet (4) ainsi qu'à l'aide de l'atténuation du rayonnement (5) X, on détermine, pour rendre possible la reconstruction tomodensitométrique, une pose de l'unité (1) de rayons X par rapport à l'objet (4),

dans lequel

- à l'aide du modèle numérique de l'objet (4), on calcule des valeurs (11) de modèle pour l'atténuation du rayonnement (5) X, lors de la traversée de l'objet (4) pour plusieurs poses de l'unité (5) de rayons X par rapport à l'objet (4),
- à l'aide des valeurs (11) de modèle, qui comprennent des paires d'images de modèle ainsi que des poses de modèle respectives appartenant aux images de modèle, on enseigne à un dispositif (7) d'apprentissage automatique à déterminer la pose de l'unité (4) de rayons X par rapport à l'objet (4) à l'aide de l'atténuation déterminée du rayonnement (5) X ; **caractérisé en ce que**
- dans un procédé en deux stades, on détermine d'abord la pose de l'unité de rayons X par rapport à l'objet à l'aide des valeurs de modèle pour l'atténuation du rayonnement X et de l'atténuation déterminée du rayonnement X et ensuite à l'aide de la pose déterminée de l'unité de rayons X par rapport à l'objet, on calcule les valeurs de projection pour l'atténuation et on les compare à l'atténuation déterminée du rayonnement X.

2. Procédé suivant la revendication 1, **caractérisé en ce qu'**à l'aide du modèle numérique de l'objet ainsi qu'à l'aide de la pose déterminée, on calcule les valeurs de projection de l'atténuation du rayonnement X sous la forme d'une image de projection, dans lequel l'image de projection correspond en particulier à une simulation d'une image de rayons X.

3. Procédé suivant l'une des revendications précédentes, **caractérisé en ce que** l'unité (1) de rayons X comprend une source (2) de rayons X et un détecteur (3) de rayons X, dans lequel on choisit librement une position relative de la source (2) de rayons X de l'objet (4) et du détecteur (3) de rayons X, en respectant la condition que l'objet (4) se trouve dans le chemin du rayonnement (5) X.

4. Procédé suivant l'une des revendications précédentes, **caractérisé en ce qu'**à l'aide des valeurs (11) de modèle, on enseigne, à un réseau neuronal artificiel, de déterminer la pose de l'unité (4) de rayons X par rapport à l'objet (4) à l'aide de l'atténuation déterminée du rayonnement (5) X.

5. Procédé suivant l'une des revendications précédentes, **caractérisé en ce que** l'on détermine la pose de l'unité (1) de rayons X par rapport à l'objet (4), au moins en partie en comparant l'atténuation déterminée du rayonnement (5) X aux valeurs (11) de modèle.

6. Procédé suivant la revendication 5, **caractérisé en ce que** l'on continue à enseigner au dispositif (7) d'apprentissage automatique, en particulier au réseau neuronal artificiel, par retour (20) d'erreur.

7. Procédé suivant l'une des revendications précédentes, **caractérisé en ce que** pour la pose déterminée de l'unité (1) de rayons X par rapport à l'objet (4), on calcule des valeurs de projection de l'atténuation du rayonnement (5) X et on les compare à l'atténuation déterminée du rayonnement (5) X.

8. Procédé suivant la revendication 7, **caractérisé en ce que** l'on continue à faire l'apprentissage du calcul des valeurs de projection et/ou de la détermination de la pose de l'unité (1) de rayons X par rapport à l'objet (4) par retour (21) d'erreur à l'aide de la comparaison des valeurs de projection à l'atténuation déterminée.

9. Installation (9) à rayons X, comprenant

- une source (2) de rayons X pour l'émission d'un rayonnement (5) X,
- un détecteur (3) de rayons X pour la détermination d'une atténuation du rayonnement (5) X par un objet (4) se trouvant dans le chemin du rayonnement (5) X, et comprenant
- une unité (6) de calcul, qui est agencée pour déterminer des données de structure de l'objet (4) à l'aide de l'atténuation du rayonnement (5) X,

**caractérisée par**

- une unité (8) de mémoire, dans laquelle un modèle numérique de l'objet (4) peut être mis en mémoire,
- dans laquelle l'unité (6) de calcul est agencée pour déterminer à l'aide de l'atténuation détectée du rayonnement (5) X et du modèle numérique, une pose de l'unité (1) de rayons X par rapport à l'objet (4),

**caractérisée en ce que**

- l'installation (9) de rayons X est agencée pour effectuer un procédé suivant l'une des revendications 1 à 8.

10. Installation (1) à rayons X suivant la revendication 9, **caractérisée en ce que** l'unité (6) de calcul comprend un dispositif (7) d'apprentissage automatique, en particulier un réseau neuronal artificiel.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006011008 A1
- US 20130177230 A1
- US 20170024634 A1